# EUROPÄISCHE PATENTSCHRIFT

(11) **EP 0 850 533 B1**
(45) Veröffentlichungstag und Bekanntmachung des Hinweises auf die Patenterteilung: **14.03.2001**
(21) Anmeldenummer: 96934414.2
(22) Anmeldetag: 09.09.1996
(51) Int. Cl.: H04N 1/06

(54) **SPANNVORRICHTUNG ZUR VERBINDUNG WECHSELBARER ABTASTTROMMELN MIT DEM ROTATIONSANTRIEB VON TROMMELSCANNERN**
TENSIONING DEVICE FOR COUPLING INTERCHANGEABLE SCANNING DRUMS TO THE ROTARY DRIVE OF DRUM SCANNERS
DISPOSITIF DE TENSION POUR ACCOUPLER DES TAMBOURS D'EXPLORATION REMPLA ABLES AU MOTEUR D'ENTRAINEMENT ROTATIF DES ANALYSEURS A TAMBOURS

(30) Priorität: 12.09.1995 DE 19533750
(43) Veröffentlichungstag der Anmeldung: 01.07.1998
(73) Patentinhaber: Heidelberger Druckmaschinen Aktiengesellschaft, 69115 Heidelberg (DE)
(72) Erfinder: LASSEN, Bernd, D-24248 Mönkeberg (DE)
(86) Internationale Anmeldenummer: DE9601682
(87) Internationale Veröffentlichungsnummer: WO9710669

(56) Entgegenhaltungen:
- EP-A- 0 279 874
- DE-A- 4 427 851
- FR-A- 2 248 901

## Beschreibung

Einseitig gelagerte und wechselbare Abtasttrommeln von Trommelscannern zur Abtastung von Aufsichts- oder Durchsichtsbildvorlagen müssen sicher und schnell mit dem Rotationsantrieb der Scannereinheit verbunden werden können. Wechselbare Trommelausführungen erleichtern die Bildvorlagenaufbringung und gestatten eine wirtschaftliche Montage von Abtasttrommeln, die arbeitsvorbereitend simultan zum Abtastprozeß mit Bildvorlagen beschickt werden können. Nach dem Stand der Technik, unter anderem dargelegt in der Europäische Patentschrift EP O 279 874, war es bisher nötig, zur Erzielung einer hinreichend stabilen Verbindung und eines sicheren, dynamischen Betriebes kostenintensive, aktiv gestützte Spannvorrichtungen zu konstruieren. Diesen Nachteil umgeht die vorliegende Erfindung durch eine kostengünstige Konstruktion, die sich für die Koppelung von Trommel- und Antriebsmotorflansch durch die Scannerrotation hervorgerufener Fliehkräfte in Kombination mit Kniehebelmechaniken bedient.

Im Folgenden wird die Neuerung an Hand der Figuren 1, 2, 3 und 4 näher erläutert. Es zeigen:
- Figur 1: das Prinzip eines Trommelspanners
- Figur 2: eine Prinzipskizze einer Spannvorrichtung,
- Figur 3: eine konstruktive Ausführung einer Spannvorrichtung in Seiten- und perspektivischer Ansicht, und
- Figur 4: eine perspektivische Schnittdarstellung der Einbauumgebung der Spannvorrichtung nach Figur 3.

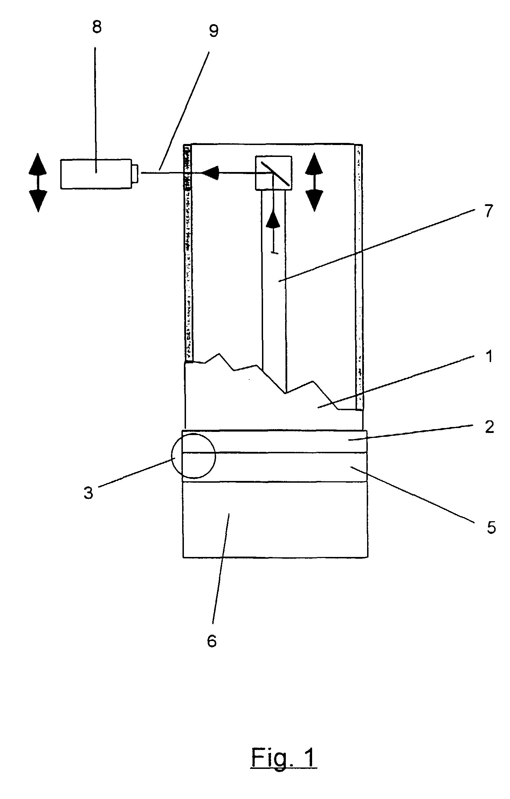

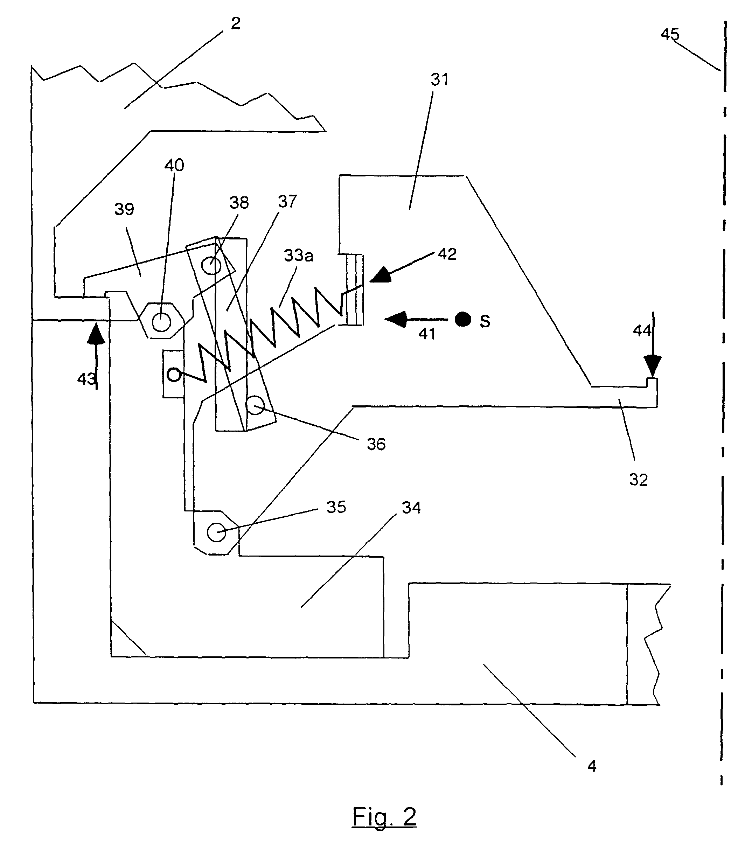

Figur 1 demonstriert das Prinzip eines Trommelscanners mit senkrechter Trommelachse. Eine einseitig gelagerte Abtasttrommel (1) besteht aus Glas, um neben Aufsichts- auch Transparentbildmaterial in Durchsicht abtasten zu können. Die Abtasttrommel ist in einem Metallflansch (2) gefaßt und ruht mit diesem auf dem Motorflansch (5), der eine Einheit mit dem Antriebsmotor (6) bildet. Metallflansch (2) und Motorflansch (5) sind durch drei, um 120 ° am Umfang versetzt angeordnete, Spannvorrichtungen gekoppelt, die im Motorflansch untergebracht und in Figur 2 detailliert sind. Eine der Spannvorrichtungen ist durch einen Kreis (3) angedeutet. Während eines Abtastvorgangs rotiert die Trommel (1) und bewegen sich Beleuchtungsarm (7) und Abtasteinheit (8), starr miteinander gekoppelt, parallel zur Trommelachse in Richtung Antriebsmotor (6). Dabei wird eine auf der Trommeloberfläche montierte Bildvorlage durch den Lichtstrahl (9) in Abtastzeilen zerlegt. Am Ende einer Abtastung ist der Beleuchtungsarm (7) in einer Hohlachse von Motorflansch (5) und Antriebsmotor (6) eingetaucht.

In Figur 2 ist skizziert, wie eine Fliehkraft (41) im Zusammenwirken mit einer sehr geringen, statischen Federkraft (42) zur Erzeugung einer gewünschten Spannkraft (43) genutzt wird. Der Motorflansch (4) trägt die Konstruktionselemente der Spannvorrichtung. Ihre Basis bildet ein Fuß (34). Mit ihm ist ein Spannhebel (31) über eine Achse (35) verbunden. Eine Schubstange (37) mit Achsverbindungen (36) und (38) ermöglicht die Kraftübertragung von dem Spannhebel (31) auf einen Klemmhebel (39). Der Klemmhebel (39) ist über eine Achsverbindung (40) wie der Spannhebel (31) mit dem Fuß (34) verbunden. Eine Zugfeder (33a) sorgt bereits bei Trommelstillstand für eine hinreichende Grundspannkraft (43) zur Fixierung des Metallflansches der Abtasttrommel (2) auf dem Motorflansch (4). Konstruktiv wird dafür gesorgt, daß die Trommelspannung nur bei Trommelstillstand durch eine Auslösekraft (44) über einen Auslesefinger (32) gelöst werden kann. Bei Rotation der Abtasttrommel (1) mit ihren Flansch (2) sowie des Antriebsmotors (6) mit seinem Flansch (5) um die Achse (45) addiert sich die Fliehkraft (41) zur statischen Federkraft (42) und verstärkt die Spannkraft (43).

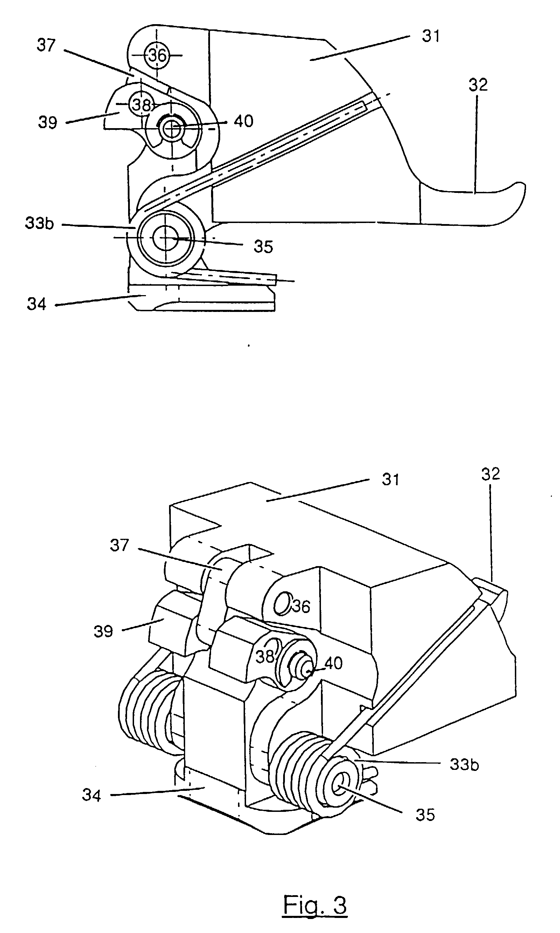

Figur 3 zeigt eine konstruktive Ausführung der Spannvorrichtung (3) in Seiten- und perspektivischer Ansicht. Bei dieser Ausführung wurden günstigere Lagen der Achsverbindungen und statt der Zugfeder (33a) eine Schenkelfeder (33b) gewählt.

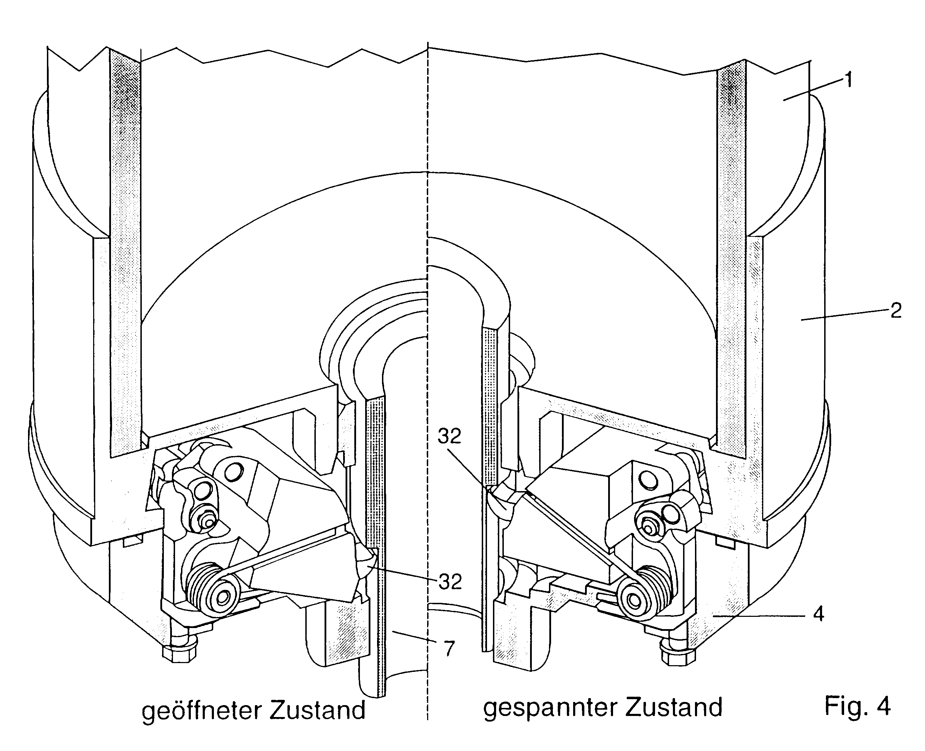

Die weiteren aus Figur 2 bekannten Konstruktionselemente, wie Fuß (34), Spannhebel (31 ),Schubstange (37) und Klemmhebel (39) und die Achsverbindungen (35), (36), (38) und (40) dienen den vorstehend zu Figur 2 beschriebenen Aufgaben. In perspektivischer Schnittdarstellung demonstriert Figur 4 die Einbaulage der in Figur 3 dargestellten Spannvorrichtung. Dabei zeigt die linke Bildhälfte den gelösten, ungespannten Zustand und die rechte Bildhälfte den Spannzustand. Zu erkennen sind Glasabtasttrommel (1 ) mit Flansch (2), Motorflansch (4), zwei der insgesamt drei um 120 ° in Umfangsrichtung versetzt angeordneten Spannvorrichtungen (3) und das Kopfteil des Beleuchtungsarm (7), über das der Auslösefinger (32) betätigt wird. Bei einer anderen konstruktiven Ausführung könnte eine Auslöseschaltung statt von innen durch eine Hohlachse von der äußeren Umfangsoberfläche des Motorflansches (4) her wirken. Für eine Anfangsfixierung der Abtasttrommel und einer Verhinderung ihres Durchrutschens beim Hochlauf reichen geringe Federkräfte aus, was bedeutet, daß beim Trommelstillstand vorteilhaft nur eine geringe Schaltkraft für einen Trommelwechsel benötigt wird. Bei den üblichen, hohen Scannerdrehzahlen von ca. 2000 min~1 bewirken neben einer sehr kleinen, unvermeidlichen Restunwucht der Abtasttrommel auch Bildabtastvorlagen, die nie vollständig homogen auf der Trommeloberfläche verteilt montiert werden können, große Kippkräfte. Durch die geschilderte Ausnutzung der Fliehkraft lassen sich auf einfache und aufwandsarme Weise Spannkräfte erzeugen, die diesen Unwuchtbedingungen gewachsen sind. Bei eventuellem Federversagen würde die Betriebssicherheit aufrechterhalten. Die Erfindung läßt sich sowohl für vertikale wie auch für horizontale Drehlagen der Abtasttrommel realisieren. Für die horizontale Drehlage kann zur Aufnahme des Kippmomentes bei der Trommelankoppelung ein Haltehaken gemäß der eingangs genannten Patentschrift eingesetzt werden.

## Patentansprüche

1. Spannvorrichtungen für einseitig gelagerte und wechselbare Abtasttrommeln von Trommelscannern, die der Abtastung von Aufsichts- oder Durchsichtsbildvorlagen dienen, zur Erzielung einer hinreichend stabilen Verbindung und eines sicheren, dynamischen Betriebes dadurch gekennzeichnet, daß
a) eine Abtasttrommel (1 ) mit Ihrem Montageflansch (2) zentrisch gegenüber dem Aufnahmeflansch (5) eines Antriebsmotors positioniert ist, wobei der Montageflansch der Abtasttrommel mit dem Aufnahmeflansch des Antriebsmotors mittels Spannvorrichtungen, die jeweils aus einem Spannhebel (31), einer Schubstange (37) und einem Klemmhebel (39) bestehen, verbunden ist,
b) Federn (33) Grundspannkräfte (42) zur Anfangsfixierung und zur Verhinderung des Durchrutschens beim Hochlauf erzeugen, wobei die Grundspannkräfte jeweils über den Spannhebel (31), die Schubstange (37) und den Klemmhebel (39) übertragen werden,
c) bei Rotation des Scanners Fliehkräfte so auf Kniehebelmechaniken, bestehend aus Spannhebel (31), Schubstangen (37) und Klemmhebel (39) wirken, daß die Spannkräfte der Klemmhebel (43) gegen den Kragen des Trommelflansches auf einfache Weise stark vergrößert werden, um eine stabile und sichere Koppelung der beiden Flansche (2) und (5) trotz durch Restunwuchten hervorgerufener Kippkräfte zu erzeugen, und
d) wegen der geringen Grundspannkräfte auch nur eine geringe Löseschaltkraft für einen Trommelwechsel gefordert ist.

2. Spannvorrichtungen nach Anspruch 1 dadurch gekennzeichnet, daß sie sowohl bei vertikalen, wie auch bei horizontalen Drehlagen der Abtasttrommel anwendbar sind.

3. Spannvorrichtungen nach Anspruch 1 dadurch gekennzeichnet, daß das Spannen und Lösen der Verbindung zum Wechsel der Abtasttrommel sowohl von innen durch eine Hohlachse, als auch von außen durch die Außenwand des Motorflansches erfolgen kann.

4. Spannvorrichtungen nach Anspruch 1 dadurch gekennzeichnet, daß die Betätigung der Spannmechanik sowohl automatisch wie manuell ausgeführt sein kann.

5. Spannvorrichtungen nach Anspruch 1 dadurch gekennzeichnet, daß mehr als eine von ihnen gleichmäßig am Umfang der Verbindungsstelle Abtasttrommel/ Trommelantrieb verteilt angeordnet werden.

## Claims

1. Clamping devices for single-endedly mounted and interchangeable scanning drums of drum scanners used for scanning reflective or transparent originals, providing an adequately stable connection and ensuring reliable dynamic operation, characterized in that
a) a scanning drum (1) is positioned with its mounting flange (2) centred on the hub flange (5) of a drive motor, the mounting flange of the scanning drum being connected to the hub flange of the drive motor by means of clamping devices each consisting of a clamping lever (31), a pushrod (37) and a gripping lever (39),
b) springs (33) exert basic clamping forces (42) to provide initial fixing and to prevent slipping during run-up to operating speed, these basic damping forces being transmitted via the clamping lever (31), the pushrod (37) and the gripping lever (39),
c) upon rotation of the scanner, centrifugal forces act upon toggle lever mechanisms consisting of the damping lever (31), pushrod (37) and gripping lever (39) so that the clamping forces (43) exerted by the gripping levers on the collar of the drum flange are greatly increased in a simple manner, providing a stable and secure coupling of the two flanges (2) and (5) despite tilting forces due to residual unbalance, and
d) only a small releasing force is required for drum changes, owing to the small basic clamping forces.

2. Clamping devices according to Claim 1, characterized in that they are suitable for use on both vertically and horizontally mounted scanner drums.

3. Clamping devices according to Claim 1, characterized in that the damping and disconnecting to change the scanner drum can be effected both from inside by means of a hollow axle and from outside by the outer wall of the motor flange.

4. Clamping devices according to Claim 1, characterized in that the clamping mechanism can be operated both automatically and manually.

5. Clamping devices according to Claim 1, characterized in that more than one of them are uniformly distributed around the circumference of the scanner drum/drum drive connection point.

## Revendications

1. Dispositif de serrage pour un tambour de détection monté en porte à faux d'un côté et interchangeable dans des scanners à tambour, servant à la détection de modèles d'images transparentes et non transparentes pour obtenir une liaison suffisamment solide et un fonctionnement dynamique garanti,
caractérisé en ce que
a) un tambour de détection (1) est positionné avec sa bride de montage (2) de manière centrée par rapport à la bride de réception (5) d'un moteur d'entraînement, la bride de montage du tambour de détection étant reliée à la bride de réception du moteur par l'intermédiaire de dispositifs de serrage composés chaque fois d'un levier tendeur (31), d'un poussoir (37) et d'un levier de serrage (39),
b) des ressorts (33) génèrent la force de serrage de base (42) pour la fixation initiale et éviter le glissement lors de la montée en vitesse, les forces de serrage de base étant transmises chaque fois par le levier tendeur (31), le poussoir (37) et le levier de serrage (39),
c) en rotation du scanner, les forces centrifuges agissent sur les mécaniques de levier à genouillère composées du levier tendeur (31), des poussoirs (37) et du levier de serrage (39) pour que les forces de serrage des leviers de serrage (43) soient augmentées fortement de manière simple vis-à-vis du col de la bride du tambour pour créer un couplage solide et garanti des deux brides (2, 5) malgré les forces de basculement engendrées par des balourds résiduels, et
d) du fait des faibles forces de serrage de base, il suffit d'une force de libération faible pour un changement de tambour.

2. Dispositif de serrage selon la revendication 1,
caractérisé en ce qu'
il s'applique à la fois à des paliers verticaux et horizontaux d'un tambour de détection.

3. Dispositif de serrage selon la revendication 1,
caractérisé en ce que
le serrage et le desserrage de la liaison pour changer le tambour de détection se font à la fois de l'intérieur à travers l'axe creux et de l'extérieur sur la paroi extérieure de la bride de moteur.

4. Dispositif de serrage selon la revendication 1,
caractérisé en ce que
l'actionnement du mécanisme de serrage se fait automatiquement ou manuellement.

5. Dispositif de serrage selon la revendication 1,
caractérisé en ce que
plusieurs dispositifs de serrage sont prévus répartis régulièrement à la périphérie du point de jonction tambour de détection/entraînement du tambour.
